# EUROPEAN PATENT SPECIFICATION

(11) **EP 3 806 972 B1**
(45) Date of publication and mention of the grant of the patent: **26.02.2025**
(21) Application number: 19752251.9
(22) Date of filing: 11.06.2019
(51) Int. Cl.: B01D 15/34, B01J 20/28, B01J 20/32, G01N 30/32, G01N 30/60

(54) **METHOD OF PERFORMING SIZE EXCLUSION CHROMATOGRAPHY OF BIOLOGICAL MOLECULES**
VERFAHREN ZUR DURCHFÜHRUNG EINER GRÖSSENAUSSCHLUSSCHROMATOGRAFIE VON BIOLOGISCHEN MOLEKÜLEN
PROCÉDÉ DE RÉALISATION D'UNE CHROMATOGRAPHIE D'EXCLUSION STÉRIQUE DE MOLÉCULES BIOLOGIQUES

(30) Priority: 12.06.2018 US 201862683942 P
(43) Date of publication of application: 21.04.2021
(73) Proprietor: Waters Technologies Corporation, Milford, MA 01757 (US)
(72) Inventor: WYNDHAM, Kevin, Upton, Massachusetts 01568 (US); LAUBER, Matthew A., Smithfield, Rhode Island 02896 (US)
(74) Representative: Forresters IP LLP
(86) International application number: PCT/IB2019/054880
(87) International publication number: WO 2019/239329

(56) References cited:
- WO-A2-2011/084506
- CN-A- 106 404 946
- SZABOLCS FEKETE ET AL: "Critical evaluation of fast size exclusion chromatographic separations of protein aggregates, applying sub-2[mu]m particles", JOURNAL OF PHARMACEUTICAL AND BIOCHEMICAL ANALYSIS, vol. 78-79, no. 79, 20 February 2013 (2013-02-20), AMSTERDAM, NL, pages 141 - 149, XP055635193, ISSN: 0731-7085, DOI: 10.1016/j.jpba.2013.02.013
- PATRICK DIEDERICH ET AL: "A sub-two minutes method for monoclonal antibody-aggregate quantification using parallel interlaced size exclusion high performance liquid chromatography", JOURNAL OF CHROMATOGRAPHY A, ELSEVIER, AMSTERDAM, NL, vol. 1218, no. 50, 16 September 2011 (2011-09-16), pages 9010 - 9018, XP028119435, ISSN: 0021-9673, [retrieved on 20111025], DOI: 10.1016/J.CHROMA.2011.09.086
- ALEXANDRE GOYON ET AL: "Evaluation of size exclusion chromatography columns packed with sub-3 [mu]m particles for the analysis of biopharmaceutical proteins", JOURNAL OF CHROMATOGRAPHY A, vol. 1498, 27 November 2016 (2016-11-27), AMSTERDAM, NL, pages 80 - 89, XP055635848, ISSN: 0021-9673, DOI: 10.1016/j.chroma.2016.11.056
- FEKETE SZABOLCS ET AL: "Kinetic evaluation of new generation of column packed with 1.3[mu]m core-shell p", JOURNAL OF CHROMATOGRAPHY A, ELSEVIER, AMSTERDAM, NL, vol. 1308, 7 August 2013 (2013-08-07), pages 104 - 113, XP028700754, ISSN: 0021-9673, DOI: 10.1016/J.CHROMA.2013.08.008
- FEKETE SZABOLCS ET AL: "Achievable separation performance and analysis time in current liquid chromatographic practice for monoclonal antibody separations", JOURNAL OF PHARMACEUTICAL AND BIOCHEMICAL ANALYSIS, ELSEVIER B.V, AMSTERDAM, NL, vol. 141, 12 April 2017 (2017-04-12), pages 59 - 69, XP085004071, ISSN: 0731-7085, DOI: 10.1016/J.JPBA.2017.04.004
- DI MUCCIO A ET AL: "Determination of pyrethroid pesticide residues in fatty materials by solid-matrix dispersion partition, followed by mini-column size-exclusion chromatography", JOURNAL OF CHROMATOGRAPHY A, ELSEVIER, AMSTERDAM, NL, vol. 833, no. 1, 12 February 1999 (1999-02-12), pages 19 - 34, XP004156191, ISSN: 0021-9673, DOI: 10.1016/S0021-9673(98)01039-5

## Description

### CROSS REFERENCE TO RELATED APPLICATIONS

This application claims the benefit of and priority to United States provisional patent application no. 62/683,942, filed June 12, 2018 and entitled Size Exclusion Chromatography of Biological Molecules.

### FIELD OF THE INVENTION

The present invention is directed to a method for performing size exclusion chromatography. Embodiments of the present invention feature devices and methods for improving the speed and separations of size exclusion chromatography, for example by using wide bore columns comprising a stationary phase comprising small particles (< 2 micron in diameter).

### BACKGROUND OF THE INVENTION

This application will use the following terms as defined below unless the context of the text in which the term appears requires a different meaning.

Chromatography is a separation method for concentrating or isolating one or more compounds (e.g., biomolecules) found in a mixture. The compounds (e.g., biomolecules) are normally present in a sample. The term "sample" broadly represents any mixture which an individual desires to analyze. The term "mixture" is used in the sense of a fluid containing one or more dissolved compounds (e.g., biomolecules). A compound of interest is referred to as an analyte.

Chromatography is a differential migration process. Compounds in a mixture traverse a chromatographic column at different rates, leading to their separation. The migration occurs by convection of a fluid phase, referred to as the mobile phase, in relationship to a packed bed of particles or a porous monolith structure, referred to as the stationary phase. In some modes of chromatography, differential migration occurs by differences in affinity of analytes with the stationary phase and mobile phase.

Size exclusion chromatography (SEC) is a type of chromatography in which the analytes in a mixture are separated or isolated on the basis of hydrodynamic radius. In SEC, separation occurs because of the differences in the ability of analytes to probe the volume of the porous stationary phase media. See, for example, A. M. Striegel et. al. Modern Size-Exclusion Chromatography: Practice of Gel Permeation and Gel Filtration Chromatography, 2nd Edition, Wiley, NJ, 2009. SEC is typically used for the separation of large molecules or complexes of molecules. For example, without limitation, many large molecules of biological origin, such as deoxyribonucleic acids (DNAs), ribonucleic acids (RNAs), proteins, polysaccharides and fragments and complexes thereof are analyzed by SEC. Synthetic polymers, plastics and the like are also analyzed by SEC.

SEC is normally performed using a column having a packed bed of particles. The packed bed of particles is a separation media or stationary phase through which the mobile phase will flow. The column is placed in fluid communication with a pump and a sample injector. The sample mixture is loaded onto the column under pressure by the sample injector and the mixture and mobile phase are pushed through the column by the pump. The compounds in the mixture leave or elute from the column with the largest compounds exiting first and the smallest molecules leaving last.

The column is placed in fluid communication with a detector, which can detect the change in the nature of the solution as the solution exits the column. The detector will register and record these changes as a plot, referred to as a chromatogram, which is used to determine the presence or absence of the analyte. The time at which the analyte leaves the column is an indication of the size of the molecule. Molecular weight of the molecules can be estimated using standard calibration curves. Examples of detectors used for size-exclusion chromatography are, without limitation, refractive index detectors, UV detectors, light-scattering detectors and mass spectrometers.

It is desired to have columns for use with SEC techniques which can operate at pressures greater than 7 MPa (1,000 psi) and fast flow rates to speed the time of analysis. It is also desired to have additional or increased efficiency and resolution; reduced solvent usage; and improved compatibility with advanced detectors. It is desired to have columns with a stationary phase which has a well-defined pore structure and particle size to produce highly reproducible results. It is desired to have columns with stationary phases which have surface modifications that are compatible with biological polymers. Increasingly so, there is a drive to adopt high throughput analytical approaches that can be situated closer and closer to recombinant expression such that it might be possible to achieve real time analytical feedback for the sake of continuous manufacturing or process development. It is desirable for example, to have columns with the ability to separate and analyze, in a high-throughput manner, monomer and aggregate forms of a biomolecule.

The following documents are known:
WO2011084506;
SZABOLCS FEKETE ET AL, "Critical evaluation of fast size exclusion chromatographic separations of protein aggregates, applying sub-2[mu]m particles", JOURNAL OF PHARMACEUTICAL AND BIOCHEMICAL ANALYSIS, AMSTERDAM, NL, (20130220), vol. 78-79, no. 79, doi:10.1016/j.jpba.2013.02.013, ISSN 0731-7085, pages 141 - 149, XP055635193;
PATRICK DIEDERICH ET AL, "A sub-two minutes method for monoclonal antibody-aggregate quantification using parallel interlaced size exclusion high performance liquid chromatography", JOURNAL OF CHROMATOGRAPHY A, ELSEVIER, AMSTERDAM, NL, vol. 1218, no. 50, doi:10.1016/J.CHROMA.2011.09.086, ISSN 0021-9673, (20110916), pages 9010 - 9018, (20111025), XP028119435;
ALEXANDRE GOYON ET AL, "Evaluation of size exclusion chromatography columns packed with sub-3 [mu]m particles for the analysis of biopharmaceutical proteins", JOURNAL OF CHROMATOGRAPHY A, AMSTERDAM, NL, (20161127), vol. 1498, doi:10.1016/j.chroma.2016.11.056, ISSN 0021-9673, pages 80 - 89, XP055635848;
FEKETE SZABOLCS ET AL, "Kinetic evaluation of new generation of column packed with 1.3[mu]m core-shell p", JOURNAL OF CHROMATOGRAPHY A, ELSEVIER, AMSTERDAM, NL, (20130807), vol. 1308, doi:10.1016/J.CHROMA.2013.08.008, ISSN 0021-9673, pages 104 - 113, XP028700754; and
CN106404946

### SUMMARY OF THE INVENTION

The present invention provides a method of performing size exclusion chromatography according to the claims.

Embodiments of the present invention are directed to devices and methods for performing SEC. Embodiments of the present invention operate at pressures which extend from about 3 MPa (500 psi) to about 70 MPa (10,000 psi), about 3 MPa (500 psi) to about 30 MPa (4,000 psi); about 7 MPa (1,000 psi) to about 70 MPa (10,000 psi) and greater and fast flow rates of about 1 mL/min or more to speed the time of analysis. Embodiments of the present invention feature a stationary phase which has a well-defined pore structure and particle size to produce resolution of biomolecules (e.g., resolution of monomeric and aggregate forms of a biomolecule) in a highly reproducible manner. And, embodiments of the present invention feature stationary phases which have surface modifications that are compatible with biological polymers.

In some embodiments the stationary phase material comprises particles. In some embodiments, the stationary phase material comprises particles, particles which have diameters with a mean size distribution of less than 2 micron. In some embodiments, the particles have diameters with a mean size distribution of between about 1 to about 2 microns. In some embodiments, the particles have diameters with a mean size distribution of about 1.7 microns. In some embodiments, the particles have diameters with a mean size distribution of about 1.5 microns. In some arrangements disclosed herein, not independently claimed, the solid stationary phase comprises porous particles. In some arrangements disclosed herein, not independently claimed, the solid stationary phase comprises nonporous particles.

In an embodiment, the invention provides a method of performing size exclusion chromatography comprising the steps of a) providing a housing having at least one wall defining a chamber having an entrance and an exit; and a stationary phase material comprising a core and surface composition held in said chamber; wherein said stationary phase material comprises particles having a mean size (diameter) of less than 2.0 microns and wherein the housing (13) comprises a wide bore column of a bore size of 7.8 mm inner diameter, i.d or more; b) loading a sample on said stationary material in said chamber at a column inlet pressure of greater than 3MPa (500 psi) and flowing the sample through said stationary phase media; and c) separating the sample into one or more biomolecule analytes by size, wherein the flowing the sample through said stationary phase material is carried out at a flow rate of about 1mL/min or more

**In** some embodiments, the stationary phase material comprises particles having diameters with a mean size distribution of between about 1 and 2 microns. In some embodiments, the stationary phase material comprises particles having diameters with a mean size distribution of about 1.7 microns. In some embodiments, the stationary phase material comprises particles having diameters with a mean size distribution of about 1.5 microns.

**In** some embodiments, the length of the chamber is about 50 mm. In some embodiments, the length of the chamber is about 30 mm. In some embodiments, the length of the chamber is about 20 mm. In some embodiments, the length of the chamber is about 10 mm. In some embodiments, the length of the chamber is less than about 50 mm, 30 mm, 20 mm, or 10 mm.

In some embodiments, the housing comprises a wide bore column. In some arrangements disclosed herein, not independently claimed, the column has a bore size of 4.6 mm i.d. or more. In some arrangements disclosed herein, not independently claimed, the column has a bore size of greater than about 4 mm i.d.. In some arrangements disclosed herein, not independently claimed, the column has a bore size of greater than about 5 mm i.d.. In some arrangements disclosed herein, not independently claimed, the column has a bore size of greater than about 6 mm i.d.. In some arrangements disclosed herein, not independently claimed, the column has a bore size of greater than about 7 mm i.d..

These and other features and advantages of the present invention will be apparent to those skilled in the art upon viewing the drawing described below and reading the detailed description that follows.

### BRIEF DESCRIPTION OF THE DRAWINGS

**FIG. 1** depicts a device in accordance with the present invention.
**FIG. 2A** depicts exemplary chromatographic separations of formulated infliximab using the methods described herein, at a flow rate of 1 mL/min, according to an exemplary embodiment of the invention.
FIG. 2B depicts exemplary chromatographic separations of formulated infliximab using the methods described herein, at a flow rate of 2 mL/min, according to an exemplary embodiment of the invention.
FIG. 2C depicts exemplary chromatographic separations of formulated infliximab using the methods described herein, at a flow rate of 3 mL/min, according to an exemplary embodiment of the invention.

### DETAILED DESCRIPTION OF THE INVENTION

Described herein are devices and methods for performing SEC, for example to separate, resolve, and/or analyze biomolecules, in a high-throughput manner. In one aspect, described herein are devices and methods for performing SEC, the devices comprising a housing having at least one wall defining a chamber having an entrance and an exit (e.g., wide bore columns, wide bore columns of more than about 4, 5, 6, or 7 mm inner diameter (i.d.)), and a stationary phase material comprising particles having diameters with a mean size distribution of less than 2.0 microns, for use with SEC techniques. In some embodiments, the shorter length (e.g., less than about 50 mm, about 30 mm, about 20 mm, about 10 mm, or less) of the chamber provides mitigation of the variation or change in pressure during use of the methods described herein. In some embodiments, the stationary phase material described herein comprising small particles (e.g., particles having diameters with mean size distribution of less than 2.0 microns) enclosed in a chamber of more than about 4, 5, 6, or 7 mm i.d., minimizes shear degradation of samples or sample shearing. The methods for performing SEC described herein can operate at pressures greater than 3 MPa (500 psi), 7 MPa (1,000 psi), 14 MPa (2,000 psi), or 20 MPa (3,000 psi) and fast flow rates (1 mL/min or greater) to speed the time of analysis. In some embodiments, the methods for performing SEC described herein provide high throughput analytical methods that can provide real time analytical feedback, for example, for continuous manufacturing or process development, of biomolecules as described herein. In some embodiments, the duration of the method is less than 10 minutes, 5 minutes, 4 minutes, 3 minutes, 2 minutes, or 1 minute.

Embodiments of the present invention are now described in detail as devices and methods for performing SEC with the understanding that such devices and methods are exemplary devices and methods. Such devices and methods constitute what the inventors now believe to be the best mode of practicing the invention. Those skilled in the art will recognize that such devices and methods are capable of modification and alteration.

### Methods of Performing Size Exclusion Chromatography

In one aspect, the invention provides a method of performing size exclusion chromatography comprising the steps of a) providing a housing having at least one wall defining a chamber having an entrance and an exit; and a stationary phase material comprising a core and surface composition held in said chamber; wherein said stationary phase material comprises particles having diameters with a mean size distribution of less than 2.0 microns and wherein the housing comprises a wide bore column of a bore size of 7.8 mm inner diameter, i.d., or more; b) loading a sample on said stationary material in said chamber at a column inlet pressure of greater than 3 MPa (500 psi) and flowing the sample through said stationary phase media; and c) separating the sample into one or more biomolecule analytes by size, wherein the flowing the sample through stationary phase material is carried out at a flow rate of about 1 mL/min or more.

In some embodiments, the duration of the method is less than 60 minutes, 50 minutes, 40 minutes, 30 minutes, 20 minutes, 10 minutes, or 5 minutes. In some embodiments, the duration of the method is less than 10 minutes, 5 minutes, 4 minutes, 3 minutes, 2 minutes, or 1 minute. In some embodiments, the duration of the method is from about 8 minutes to about 30 minutes.

In some embodiments, the flowing the sample over the stationary phase is carried out at an inlet pressure of about 3 MPa (500 psi) to about 30MPa (4,000 psi). In some embodiments, the flowing the sample over the stationary phase is carried out at an inlet pressure greater than 7MPa (1,000 psi).

In some embodiments, the flowing the sample over the stationary phase is carried out at a flow rate of about 1 mL/min. In some embodiments, the flowing the sample over the stationary phase is carried out at a flow rate of about 2 mL/min. In some embodiments, the flowing the sample over the stationary phase is carried out at a flow rate of about 3 mL/min. In some embodiments, the flowing the sample over the stationary phase is carried out at a flow rate of greater than 3 mL/min.

In some embodiments, the stationary phase material comprises particles having diameters with a mean size distribution of between about 1 and 2 microns. In some embodiments, the stationary phase material comprises particles having diameters with a mean size distribution of about 1.7 microns. In some embodiments, the stationary phase material comprises particles having diameters with a mean size distribution of about 1.5 microns.

In some embodiments, the stationary phase material comprises porous particles.

In some embodiments, the stationary phase material comprises nonporous particles.

In some embodiments, the sample comprises one or more biomolecule analytes. In some embodiments, the biomolecule analyte is a nucleic acid (e.g., RNA, DNA, oligonucleotide), protein (e.g., fusion protein), peptide, antibody (e.g., monoclonal antibody (mAb)), antibody-drug conjugate (ADC), polysaccharides, virus, virus-like particle, viral vector (e.g., gene therapy viral vector, adeno associated viral vector), biosimilar, or any combination thereof. In some embodiments, the biomolecule analyte is an antibody. In some embodiments, the biomolecule analyte is a monoclonal antibody (mAb). In some embodiments, the biomolecule analyte is a high molecular weight species or aggregate form of an antibody.

In some embodiments, the length of the chamber is about 50 mm. In some embodiments, the length of the chamber is about 30 mm. In some embodiments, the length of the chamber is about 20 mm. In some embodiments, the length of the chamber is about 10 mm. In some embodiments, the length of the chamber is less than about 50 mm, 30 mm, 20 mm, or 10 mm.

According to the invention, the housing comprises a wide bore column having a bore size of 7.8 mm i.d. or more.

In some embodiments, the method of the invention comprises an additional separation or resolution step (e.g., chromatography step). In some embodiments, the methods described herein are used in multidimensional chromatographic methods (e.g., two-dimensional (2D) liquid chromatography in the first-dimension, second-dimension, or as an intermediary desalting method). For example, the methods described herein are coupled to (e.g., used in conjunction with) reverse phase chromatography, affinity chromatography, or ion exchange chromatography. In some embodiments, the methods described herein are used in conjunction with a method of separation with an immobilized enzyme column.

In some embodiments, the method further comprises an additional separation or resolution step. In some embodiments, the method further comprises a reverse phase chromatography, affinity chromatography, or ion exchange chromatography step. In some embodiments, the additional separation step comprises use of an immobilized enzyme column.

In some embodiments of the method of the invention, column inlet pressure is greater than 3 MPa (500 psi); greater than 7 MPa (1,000 psi); greater than 14 MPa (2,000 psi); greater than 20 MPa (3,000 psi); greater than 30 MPa (4,000 psi); greater than 30 MPa (5,000 psi); greater than 40 MPa (6,000 psi); greater than 50 MPa (7,000 psi); greater than 60 MPa (8,000 psi); greater than 60 MPa (9,000 psi); greater than 70 MPa (10,000 psi); greater than 100 MPa (15,000 psi); or greater than 100 MPa (20,000 psi). In still other embodiments column inlet pressure is from about 3 MPa (500 psi) to about 70 MPa (10,000 psi); 7 MPa (1,000 psi) to about 100 MPa (20,000 psi); from about 30 MPa (5,000 psi) to about 100 MPa (20,000 psi); from about 50 MPa (7,000 psi) to about 100 MPa (20,000 psi); from about 70 MPa (10,000 psi) to about 100 MPa (20,000 psi); about 7 MPa (1,000 psi) to about 100 MPa (15,000 psi); or from about 30 MPa (5,000 psi) to about 100 MPa (15,000 psi).

In certain arrangements, not independently claimed, of the method of claim the invention, the flowing the sample over the stationary phase is carried out at a flow rate of about 1 mL/min. In some arrangements, not independently claimed, the flowing the sample over the stationary phase is carried out at a flow rate of about 2 mL/min. In some arrangements, not independently claimed, the flowing the sample over the stationary phase is carried out at a flow rate of about 3 mL/min. In some arrangements, not independently claimed, the flowing the sample over the stationary phase is carried out at a flow rate of greater than 2 mL/min, or greater than 3 mL/min.

In some arrangements, not independently claimed, the duration of the method of the invention is less than 60 minutes, 50 minutes, 40 minutes, 30 minutes, 20 minutes, 10 minutes, or 5 minutes. In some arrangements, not independently claimed, the duration of the method is less than 10 minutes, 5 minutes, 4 minutes, 3 minutes, 2 minutes, or 1 minute. In certain arrangements, not independently claimed, of the method of the invention, the duration of the method is from about 8 to about 30 minutes.

In another aspect, the disclosure provides a method of performing size exclusion chromatography comprising the steps of a) providing a housing having at least one wall defining a chamber having an entrance and an exit; wherein the housing comprises a wide bore column of a bore size of 7.8 mm i.d or more; and a stationary phase material comprising a core and surface composition held in said chamber; wherein said stationary phase material comprises particles having diameters with a mean size distribution of less than 2.0 microns; b) loading a sample on said stationary phase material in said chamber at a column inlet pressure of greater than 3 MPa (500 psi) and flowing the sample through said stationary phase material; and c) separating the sample into one or more biomolecule analytes by size.

In some arrangements, not independently claimed, the duration of the method is less than 60 minutes, 50 minutes, 40 minutes, 30 minutes, 20 minutes, 10 minutes, or 5 minutes. In some arrangements, not independently claimed, the duration of the method is less than 10 minutes, 5 minutes, 4 minutes, 3 minutes, 2 minutes, or 1 minute. In some arrangements, not independently claimed, the duration of the method is from about 8 minutes to about 30 minutes.

In some arrangements, not independently claimed, the flowing the sample over the stationary phase is carried out at an inlet pressure of about 3 MPa (500 psi) to about 30 MPa (4,000 psi). In some arrangements, not independently claimed, the flowing the sample over the stationary phase is carried out at an inlet pressure greater than 7 MPa (1,000 psi).

The flowing the sample over the stationary phase is carried out at a flow rate of about 1 mL/min. In some arrangements, not independently claimed, the flowing the sample over the stationary phase is carried out at a flow rate of about 2 mL/min. In some arrangements, not independently claimed, the flowing the sample over the stationary phase is carried out at a flow rate of about 3 mL/min. In some arrangements, not independently claimed, the flowing the sample over the stationary phase is carried out at a flow rate of greater than 3 mL/min.

In some arrangements, not independently claimed, the stationary phase material comprises particles having diameters with a mean size distribution of between about 1 and 2 microns. In some arrangements, not independently claimed, the stationary phase material comprises particles having diameters with a mean size distribution of about 1.7 microns. In some arrangements, not independently claimed, the stationary phase material comprises particles having diameters with a mean size distribution of about 1.5 microns.

In some arrangements, not independently claimed, the stationary phase material comprises porous particles.

In some arrangements, not independently claimed, the stationary phase material comprises nonporous particles.

In some arrangements, not independently claimed, the sample comprises one or more biomolecule analytes. In some arrangements, not independently claimed, the biomolecule analyte is a nucleic acid (e.g., RNA, DNA, oligonucleotide), protein (e.g., fusion protein), peptide, antibody (e.g., monoclonal antibody (mAb)), antibody-drug conjugate (ADC), polysaccharides, virus, virus-like particle, viral vector (e.g., gene therapy viral vector, adeno associated viral vector), biosimilar, or any combination thereof. In some arrangements, not independently claimed, the biomolecule analyte is an antibody. In some arrangements, not independently claimed, the biomolecule analyte is a monoclonal antibody (mAb). In some arrangements, not independently claimed, the biomolecule analyte is a high molecular weight species or aggregate form of an antibody.

In some arrangements, not independently claimed, the length of the chamber is about 50 mm. In some arrangements, not independently claimed, the length of the chamber is about 30 mm. In some arrangements, not independently claimed, the length of the chamber is about 20 mm. In some arrangements, not independently claimed, the length of the chamber is about 10 mm. In some arrangements, not independently claimed, the length of the chamber is less than about 50 mm, 30 mm, 20 mm, or 10 mm.

In some arrangements, not independently claimed, the method of the invention comprises an additional separation or resolution step (e.g., chromatography step). In some arrangements, not independently claimed, the methods described herein are used in multidimensional chromatographic methods (e.g., two-dimensional (2D) liquid chromatography in the first-dimension, second-dimension, or as an intermediary desalting method). For example, the methods described herein are coupled to (e.g., used in conjunction with) reverse phase chromatography, affinity chromatography, or ion exchange chromatography. In some arrangements, not independently claimed, the methods described herein are used in conjunction with a method of separation with an immobilized enzyme column.

In some arrangements, not independently claimed, the method further comprises an additional separation or resolution step. In some arrangements, not independently claimed, the method further comprises a reverse phase chromatography, affinity chromatography, or ion exchange chromatography step. In some arrangements, not independently claimed, the additional separation step comprises use of an immobilized enzyme column.

In some arrangements, not independently claimed, of the method of the disclosure, column inlet pressure is greater than 3 MPa (500 psi); greater than 7 MPa (1,000 psi); greater than 14 MPa (2,000 psi); greater than 20 MPa (3,000 psi); greater than 30 MPa (4,000 psi); greater than 30 MPa (5,000 psi); greater than 40 MPa (6,000 psi); greater than 50 MPa (7,000 psi); greater than 60 MPa (8,000 psi); greater than 60 MPa (9,000 psi); greater than 70 MPa (10,000 psi); greater than 100 MPa (15,000 psi); or greater than 100 MPa (20,000 psi). In still other arrangements, not independently claimed, column inlet pressure is from about 3 MPa (500 psi) to about 70 MPa (10,000 psi); 7 MPa (1,000 psi) to about 100 MPa (20,000 psi); from about 30 MPa (5,000 psi) to about 100 MPa (20,000 psi); from about 50 MPa (7,000 psi) to about 100 MPa (20,000 psi); from about 70 MPa (10,000 psi) to about 100 MPa (20,000 psi); about 7 MPa (1,000 psi) to about 100 MPa (15,000 psi); or from about 30 MPa (5,000 psi) to about 100 MPa (15,000 psi).

The flowing the sample over the stationary phase is carried out at a flow rate of about 1 mL/min. In some arrangements, not independently claimed, the flowing the sample over the stationary phase is carried out at a flow rate of about 2 mL/min. In some arrangements, not independently claimed, the flowing the sample over the stationary phase is carried out at a flow rate of about 3 mL/min. In some arrangements, not independently claimed, the flowing the sample over the stationary phase is carried out at a flow rate of greater than 2 mL/min, or greater than 3 mL/min.

In some arrangements, not independently claimed, the duration of the method of the invention is less than 60 minutes, 50 minutes, 40 minutes, 30 minutes, 20 minutes, 10 minutes, or 5 minutes. In some arrangements, not independently claimed, the duration of the method is less than 10 minutes, 5 minutes, 4 minutes, 3 minutes, 2 minutes, or 1 minute. In certain arrangements, not independently claimed, of the method of the disclosure, the duration of the method is from about 8 to about 30 minutes.

In another aspect, the disclosure provides a method of performing size exclusion chromatography comprising the steps of a) providing a housing having at least one wall defining a chamber having an entrance and an exit; wherein the length of the chamber is about 50 mm; and wherein the housing comprises a wide bore column of a bore size of 7.8 mm i.d or more; and a stationary phase material comprising a core and surface composition held in said chamber; wherein said stationary phase material comprises particles having diameters with a mean size distribution of less than 2.0 microns; b) loading a sample on said stationary phase material in said chamber at a column inlet pressure of greater than 3 MPa (500 psi) and flowing the sample through said stationary phase material; and c) separating the sample into one or more biomolecule analytes by size.

In some arrangements, not independently claimed, the duration of the method is less than 60 minutes, 50 minutes, 40 minutes, 30 minutes, 20 minutes, 10 minutes, or 5 minutes. In some arrangements, not independently claimed, the duration of the method is less than 10 minutes, 5 minutes, 4 minutes, 3 minutes, 2 minutes, or 1 minute. In some arrangements, not independently claimed, the duration of the method is from about 8 minutes to about 30 minutes.

In some arrangements, not independently claimed, the flowing the sample over the stationary phase is carried out at an inlet pressure of about 3 MPa (500 psi) to about 30 MPa (4,000 psi). In some arrangements, not independently claimed, the flowing the sample over the stationary phase is carried out at an inlet pressure greater than 30 MPa (1,000 psi).

In some arrangements, not independently claimed, the flowing the sample over the stationary phase is carried out at a flow rate of about 1 mL/min. In some arrangements, not independently claimed, the flowing the sample over the stationary phase is carried out at a flow rate of about 2 mL/min. In some arrangements, not independently claimed, the flowing the sample over the stationary phase is carried out at a flow rate of about 3 mL/min. In some arrangements, not independently claimed, the flowing the sample over the stationary phase is carried out at a flow rate of greater than 3 mL/min.

In some arrangements, not independently claimed, the stationary phase material comprises particles having diameters with a mean size distribution of between about 1 and 2 microns. In some arrangements, not independently claimed, the stationary phase material comprises particles having diameters with a mean size distribution of about 1.7 microns. In some arrangements, not independently claimed, the stationary phase material comprises particles having diameters with a mean size distribution of about 1.5 microns.

In some arrangements, not independently claimed, the stationary phase material comprises porous particles.

In some arrangements, not independently claimed, the stationary phase material comprises nonporous particles.

In some arrangements, not independently claimed, the sample comprises one or more biomolecule analytes. In some arrangements, not independently claimed, the biomolecule analyte is a nucleic acid (e.g., RNA, DNA, oligonucleotide), protein (e.g., fusion protein), peptide, antibody (e.g., monoclonal antibody (mAb)), antibody-drug conjugate (ADC), polysaccharides, virus, virus-like particle, viral vector (e.g., gene therapy viral vector, adeno associated viral vector), biosimilar, or any combination thereof. In some arrangements, not independently claimed, the biomolecule analyte is an antibody. In some arrangements, not independently claimed, the biomolecule analyte is a monoclonal antibody (mAb). In some arrangements, not independently claimed, the biomolecule analyte is a high molecular weight species or aggregate form of an antibody.

In some arrangements, not independently claimed, the method of the disclosure comprises an additional separation or resolution step (e.g., chromatography step). In some arrangements, not independently claimed, the methods described herein are used in multidimensional chromatographic methods (e.g., two-dimensional (2D) liquid chromatography in the first-dimension, second-dimension, or as an intermediary desalting method). For example, the methods described herein are coupled to (e.g., used in conjunction with) reverse phase chromatography, affinity chromatography, or ion exchange chromatography. In some arrangements, not independently claimed, the methods described herein are used in conjunction with a method of separation with an immobilized enzyme column.

In some arrangements, not independently claimed, the method further comprises an additional separation or resolution step. In some arrangements, not independently claimed, the method further comprises a reverse phase chromatography, affinity chromatography, or ion exchange chromatography step. In some arrangements, not independently claimed, the additional separation step comprises use of an immobilized enzyme column.

In some arrangements, not independently claimed, of the method of the disclosure, column inlet pressure is greater than 3 MPa (500 psi); greater than 7 MPa (1,000 psi); greater than 14 MPa (2,000 psi); greater than 20 MPa (3,000 psi); greater than 30 MPa (4,000 psi); greater than 30 MPa (5,000 psi); greater than 40 MPa (6,000 psi); greater than 50 MPa (7,000 psi); greater than 60 MPa (8,000 psi); greater than 60 MPa (9,000 psi); greater than 70 MPa (10,000 psi); greater than 100 MPa (15,000 psi); or greater than 100 MPa (20,000 psi). In still other arrangements, not independently claimed, column inlet pressure is from about 3 MPa (500 psi) to about 70 MPa (10,000 psi); 7 MPa (1,000 psi) to about 100 MPa (20,000 psi); from about 30 MPa (5,000 psi) to about 100 MPa (20,000 psi); from about 50 MPa (7,000 psi) to about 100 MPa (20,000 psi); from about 70 MPa (10,000 psi) to about 100 MPa (20,000 psi); about 7 MPa (1,000 psi) to about 100 MPa (15,000 psi); or from about 30 MPa (5,000 psi) to about 100 MPa (15,000 psi).

In certain arrangements, not independently claimed, of the method of the disclosure, the flowing the sample over the stationary phase is carried out at a flow rate of about 1 mL/min. In some arrangements, not independently claimed, the flowing the sample over the stationary phase is carried out at a flow rate of about 2 mL/min. In some arrangements, not independently claimed, the flowing the sample over the stationary phase is carried out at a flow rate of about 3 mL/min. In some arrangements, not independently claimed, the flowing the sample over the stationary phase is carried out at a flow rate of greater than 2 mL/min, or greater than 3 mL/min.

In some arrangements, not independently claimed, the duration of the method of the invention is less than 60 minutes, 50 minutes, 40 minutes, 30 minutes, 20 minutes, 10 minutes, or 5 minutes. In some embodiments, the duration of the method is less than 10 minutes, 5 minutes, 4 minutes, 3 minutes, 2 minutes, or 1 minute. In certain embodiments of the method of the invention, the duration of the method is from about 8 to about 30 minutes.

### Devices for Performing Size Exclusion Chromatography

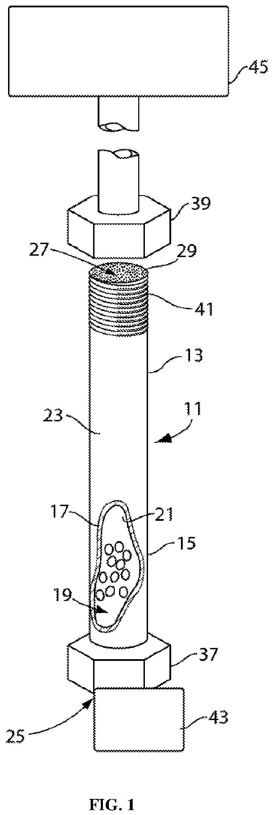

Turning now to **FIG. 1****,** a device embodying features of the present invention, generally designated by the numeral **11,** is depicted. Device **11,** for performing SEC, comprises the following major elements or components: a housing **13** and a particulate stationary phase media **15.**

The housing **13** has at least one wall **17** defining a chamber **19.** As depicted, the wall **17** is in the form of a cylinder having an interior surface **21** and an exterior surface **23.** Although described herein as a column, the housing **13** and wall **17** defining a chamber **19** may assume any shape. For example, without limitation, the housing **13** may be a planar chip-like structure in which the chamber **19** is formed within.

In some embodiments, the length of the column (or housing and wall defining the chamber) is less than about 150 mm, less than about 100 mm, or less than about 50 mm. In some embodiments, the length of the chamber is less than about 150 mm, less than about 100 mm, or less than about 50 mm. In some embodiments, the length of the chamber is about 50 mm, about 30 mm, about 20 mm, about 10 mm or less.

According to the invention, the housing comprises a wide bore column. According to the invention, the column has a bore size of about 7.8 mm i.d. or more.

As depicted, the at least one wall **17** defines a chamber having an entrance opening **25** and an exit opening **27.** Although the entrance opening **25** is obscured in **FIG. 1****,** the entrance opening **25** and exit opening **27** share several features. The entrance opening **25** and exit opening **27** have a frit of which only frit **29** is shown with respect to exit opening **27.** As depicted, the frit **29** is an element which contains the stationary phase within the column, but allows mobile phase to pass through. In certain embodiments, the frit may be comprised of sintered metal or similar material. In other embodiments, the frit may also be comprised of a binder or glue that holds the particles in the bed together, but is porous enough to allow fluid flow through the bed. In still other embodiments, the stationary phase material may comprise particles. In such embodiments, a frit element may not be required.

The at least one wall **17** has first connection means at or about the entrance opening **25** and a second connection means at or about the exit opening **27.** The first connection means comprises a fitting nut **37** held to the at least wall **17** by cooperating threads [not shown]. Similarly the second connection means comprises a second fitting nut **39** held to the at least one wall **17** by cooperating threads **41.** First and second connection means may comprise cooperating fittings, clamps, interlocking grooves and the like [not shown]. First connection means and second connection means may also comprise ferrules, seals, O-rings and the like [not shown] which have been omitted from the drawing for simplicity.

The entrance opening **25** of chamber **17** is in fluid communication with a source of fluid and sample depicted in block schematic form by numeral **43.** A preferred source of fluid and sample has an operating pressure in the normal HPLC or UPLC range of about 30 MPa (5,000 psi). However, particles and the device **11** are capable of operating pressures of greater than 3 MPa (500 psi); greater than 7 MPa (1,000 psi); greater than 14 MPa (2,000 psi); greater than 20 MPa (3,000 psi); greater than 30 MPa (4,000 psi); greater than 30 MPa (5,000 psi); greater than 40 MPa (6,000 psi); greater than 50 MPa (7,000 psi); greater than 60 MPa (8,000 psi); greater than 60 MPa (9,000 psi); or greater than 70 MPa (10,000 psi). In still other embodiments of the device of the invention, particles and the device are capable of operating pressures from about 3 MPa (500 psi) to about 70 MPa (10,000 psi); 7 MPa (1,000 psi) to about 100 MPa (15,000 psi); from about 30 MPa (5,000 psi) to about 100 MPa (15,000 psi); from about 50 MPa (7,000 psi) to about 100 MPa (15,000 psi); from about 70 MPa (10,000 psi) to about 100 MPa (15,000 psi); about 7 MPa (1,000 psi) to about 70 MPa (10,000 psi); or from about 30 MPa (5,000 psi) to about 70 MPa (10,000 psi).

In certain specific embodiments, the source of fluid and sample is an ACQUITY^{®} UPLC^{®} separation module (Waters Corporation, Milford, Mass., USA).

The exit opening **27** of chamber **17** is in fluid communication with a detector **45.** Numerous detectors are available; however, a specific detector is a Waters ACQUITY^{®} UPLC^{®} Tunable UV Detector (Waters Corporation, Milford, Mass., USA).

Particulate stationary phase media **15** is held in the chamber **17.** The particulate stationary phase media **15** comprises particles, which are not drawn to scale in **FIG. 1****.** The particles are generally spheres but can be any shape useful in chromatography. The particles generally have a size distribution in which the average diameter is less than 2 microns (e.g., 2 microns or 1 micron). In some embodiments, the particles have a size distribution in which the average diameter is about 1.7 microns. In some embodiments, the particles have a size distribution in which the average diameter is about 1.5 microns. In some embodiments, the particles have a size distribution in which the average diameter is between about 1 micron and about 2 microns.

### Stationary Phase Material

The devices and methods of the invention utilize a stationary phase material. Such material can be composed of one or more particles, one or more spherical particles, or one or more pellicular particles. The particles generally have a size distribution in which the average diameter is less than 2 micron (e.g., 2 microns or 1 micron). In some embodiments, the particles have a size distribution in which the average diameter is about 1.7 microns. In some embodiments, the particles have a size distribution in which the average diameter is about 1.5 microns. In some embodiments, the particles have a size distribution in which the average diameter is between about 1 micron and about 2 microns.

In certain embodiments, said stationary phase material comprises particles having a core composition and a surface composition represented by Formula 1:

W-[X]-Q Formula 1

wherein:
X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte.

Furthermore, in certain embodiments, W and Q occupy free valences of the core composition, X, or the surface of the core composition. In other embodiments of the device of the invention, W and Q are selected to form a surface composition. In other embodiments, X may be selected to form a block polymer or group of block polymers.

In aspects of the invention, the particles of the particulate stationary phase material may have diameters with a mean size distribution of less than 2 micron. In some embodiments, the particles have diameters with a mean size distribution of between about 1 micron to about 2 microns. In some embodiments, the particles have diameters with a mean size distribution of about 1.7 microns. In some embodiments, the particles have diameters with a mean size distribution of about 1.5 microns.

In other embodiments of the device of the invention the stationary phase material has a pore volume of 0.1 to 1.7 cm³/g; 0.2 to 1.6 cm³/g; 1.0 to 1.5 cm³/g or 1.1 to 1.5 cm³/g.

In certain embodiments of the stationary phase material, X is silica, titanium oxide, aluminum oxide or an organic-inorganic hybrid core comprising an aliphatic bridged silane.

In specific embodiments, X is an organic-inorganic hybrid core comprising a aliphatic bridged silane. In certain other specific embodiments, the aliphatic group of the aliphatic bridged silane is ethylene.

In certain other embodiments, the core material, X, may be cerium oxide, zirconium oxides, or a ceramic material. In certain other embodiments, the core material, X, may have a chromatographically enhancing pore geometry (CEPG). CEPG includes the geometry, which has been found to enhance the chromatographic separation ability of the material, e.g., as distinguished from other chromatographic media in the art. For example, a geometry can be formed, selected or constructed, and various properties and/or factors can be used to determine whether the chromatographic separations ability of the material has been "enhanced", e.g., as compared to a geometry known or conventionally used in the art. Examples of these factors include high separation efficiency, longer column life and high mass transfer properties (as evidenced by, e.g., reduced band spreading and good peak shape.) These properties can be measured or observed using art-recognized techniques. For example, the chromatographically-enhancing pore geometry of the present porous inorganic/organic hybrid particles is distinguished from the prior art particles by the absence of "ink bottle" or "shell shaped" pore geometry or morphology, both of which are undesirable because they, e.g., reduce mass transfer rates, leading to lower efficiencies. Chromatographically-enhancing pore geometry is found in hybrid materials containing only a small population of micropores. A small population of micropores is achieved in hybrid materials when all pores of a diameter of about <34 Å contribute less than about 110 m²/g to the specific surface area of the material. Hybrid materials with such a low micropore surface area (MSA) give chromatographic enhancements including high separation efficiency and good mass transfer properties (as evidenced by, e.g., reduced band spreading and good peak shape). Micropore surface area (MSA) is defined as the surface area in pores with diameters less than or equal to 34 Å, determined by multipoint nitrogen sorption analysis from the adsorption leg of the isotherm using the BJH method. As used herein, the acronyms "MSA" and "MPA" are used interchangeably to denote "micropore surface area".

In certain embodiments the core material, X, may be surface modified with a surface modifier having the formula Zₐ(R')₃Si-R", where Z=Cl, Br, I, C₁-C₅ alkoxy, dialkylamino or trifluoromethanesulfonate; a and b are each an integer from 0 to 3 provided that a+b=3; R¹ is a C₁-C₆ straight, cyclic or branched alkyl group, and R" is a functionalizing group.

In another embodiment, the core material, X, may be surface modified by coating with a polymer.

In certain embodiments, the surface modifier is selected from the group consisting of octyltrichlorosilane, octadecyltrichlorosilane, octyldimethylchlorosilane and octadecyldimethylchlorosilane.

In some embodiments, the surface modifier is selected from the group consisting of octyltrichlorosilane and octadecyltrichlorosilane. In other embodiments, the surface modifier is selected from the group consisting of an isocyanate or 1,1'-carbonyldiimidazole (particularly when the hybrid group contains a (CH₂)₃OH group).

In another embodiment, the material has been surface modified by a combination of organic group and silanol group modification.

In still another embodiment, the material has been surface modified by a combination of organic group modification and coating with a polymer. In a further embodiment, the organic group comprises a chiral moiety.

In yet another embodiment, the material has been surface modified by a combination of silanol group modification and coating with a polymer.

In other embodiments, the material has been surface modified via formation of an organic covalent bond between an organic group on the material and the modifying reagent.

In still other embodiments, the material has been surface modified by a combination of organic group modification, silanol group modification and coating with a polymer.

In another embodiment, the material has been surface modified by silanol group modification.

In certain embodiments, the surface modified layer may be porous or nonporous.

In other embodiments of the stationary phase material, Q is a hydrophilic group, a hydrophobic group or absent.

In some embodiments of the stationary phase material, wherein Q is a hydrophilic group, Q is an aliphatic group. In other embodiments, said aliphatic group is an aliphatic diol.

In still other embodiments, Q is represented by Formula 2 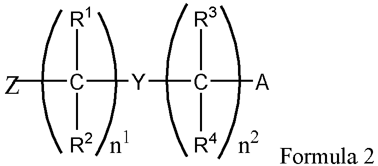 wherein
n¹ an integer from 0-30;
n² an integer from 0-30;
each occurrence of R¹, R², R³ and R⁴ independently represents hydrogen, fluoro, lower alkyl, a protected or deprotected alcohol, a zwiterion, or a group Z;
Z represents:
   a surface attachment group produced by formation of covalent or non-covalent bond between the surface of the stationary phase material with a moiety of Formula 3:

      (B¹)ₓ(R⁵)y(R⁶)_{z}Si- Formula 3:

      wherein
      a) x is an integer from 1-3,
      b) y is an integer from 0-2,
      c) z is an integer from 0-2,
      d) and x+y+z=3
   each occurrence of R⁵ and R⁶ independently represents methyl, ethyl, n-butyl, iso-butyl, tert-butyl, iso-propyl, thexyl, substituted or unsubstituted aryl, cyclic alkyl, branched alkyl, lower alkyl, a protected or deprotected alcohol, or a zwiterion group;
   B¹ represents -OR⁷, -NR^{7'}R^{7"}, -OSO₂CF₃, or -Cl; where each of R⁷, R^{7'} and R^{7"} represents hydrogen, methyl, ethyl, n-butyl, iso-butyl, tert-butyl, iso-propyl, thexyl, phenyl, branched alkyl or lower alkyl;
      b) a direct attachment to a surface hybrid group of X through a direct carbon-carbon bond formation or through a heteroatom, ester, ether, thioether, amine, amide, imide, urea, carbonate, carbamate, heterocycle, triazole, or urethane linkage; or
      c) an adsorbed group that is not covalently attached to the surface of the stationary phase material;
      d) a surface attachment group produced by formation of a covalent bond between the surface of the stationary phase material, when W is hydrogen, by reaction with a vinyl or alkynyl group;
      Y represents a direct bond; a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrates, a dendrimer or dendrigraphs, or a zwitterion group; and
   A represents
      i.) a hydrophilic terminal group;
      ii.) hydrogen, fluoro, fluoroalkyl, lower alkyl, or group Z; or
      iii.) a functionalizable group.

In certain embodiments of the device of the invention, wherein Q is an aliphatic diol of Formula 2, n¹ an integer from 2-18, or from 2-6. In other embodiments of the device of the invention, wherein Q is an aliphatic diol of Formula 2, n² an integer from 0-18 or from 0-6. In still other embodiments of the device of the invention, wherein Q is an aliphatic diol of Formula 2, n¹ an integer from 2-18 and n² an integer from 0-18, n¹ an integer from 2-6 and wherein n² an integer from 0-18, n¹ an integer from 2-18 and n² an integer from 0-6, or n¹ an integer from 2-6 and n² an integer from 0-6.

In yet other embodiments of the stationary phase material, wherein Q is an aliphatic diol of Formula 2, A represents i) a hydrophilic terminal group and said hydrophilic terminal group is a protected or deprotected forms of an alcohol, diol, glycidyl ether, epoxy, triol, polyol, pentaerythritol, pentaerythritol ethoxylate, 1,3-dioxane-5,5-dimethanol, tris(hydroxymethyl)aminomethane, tris(hydroxymethyl)aminomethane polyglycol ether, ethylene glycol, propylene glycol, poly(ethylene glycol), poly(propylene glycol), a mono-valent, divalent, or polyvalent carbohydrate group, a multi-antennary carbohydrate, a dendrimer containing peripheral hydrophilic groups, a dendrigraph containing peripheral hydrophilic groups, or a zwitterion group.

In still other embodiments of the stationary phase material, wherein Q is an aliphatic diol of Formula 2, A represents ii.) hydrogen, fluoro, methyl, ethyl, n-butyl, t-butyl, i-propyl, lower alkyl, or group Z.

In still yet other embodiments of the stationary phase material, wherein Q is an aliphatic diol of Formula 2, A represents iii.) a functionalizable group, and said functionalizable group is a protected or deprotected form of an amine, alcohol, silane, alkene, thiol, azide, or alkyne. In some embodiments, said functionalizable group can give rise to a new surface group in a subsequent reaction step wherein said reaction step is coupling, metathesis, radical addition, hydrosilylation, condensation, click, or polymerization.

In still other embodiments, the group Q can be a surface modifier. Non-limiting examples of surface modifiers that can be employed for these materials include:

### A.) Silanes that result in a hydrophilic surface modification

### Hydrophilic Surface

| **Option** | **B¹** | **R⁵** | **R⁶** | **x/y/z** | **n¹** |
|---|---|---|---|---|---|
| 1 | chloro, methoxy, or ethoxy | -- | -- | 3/0/0 | 3 |
| 2 | chloro, methoxy, or ethoxy | methyl, ethyl, n-propyl, i-propyl, or t-butyl | -- | 2/1/0 | 3 |
| 3 | chloro, methoxy, or ethoxy | methyl, ethyl, n-propyl, i-propyl, or t-butyl | -- | 1/2/0 | 3 |
| 4 | chloro, methoxy, or ethoxy | methyl, ethyl, n-propyl, i-propyl, or t-butyl | methyl, ethyl, n-propyl, i-propyl, or t-butyl | 1/1/1 | 3 |

where A is selected from the following:

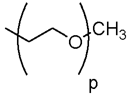

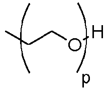

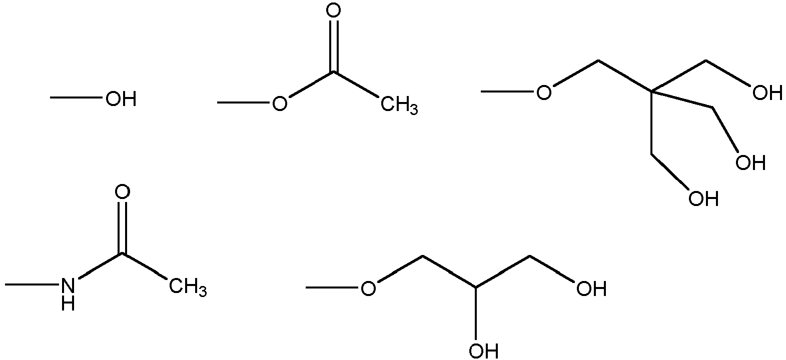

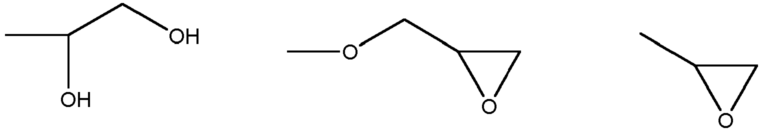

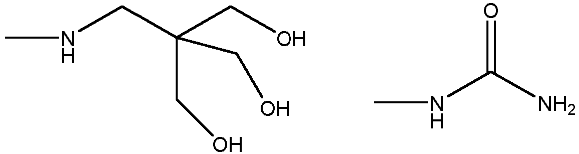

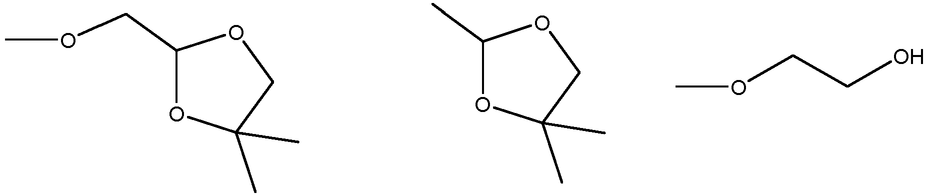

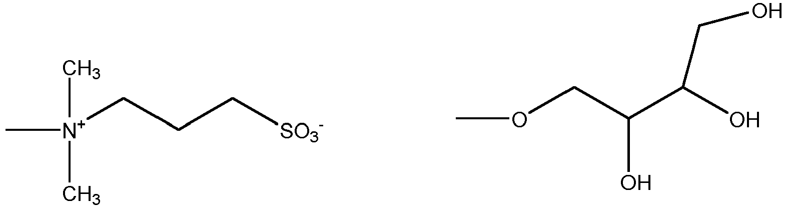

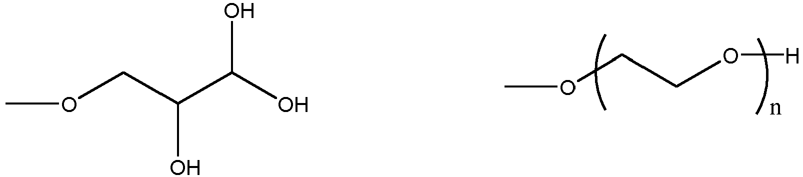

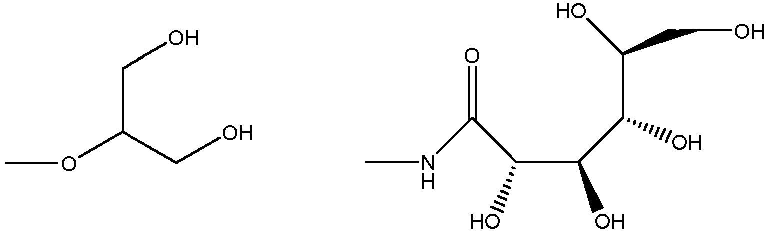

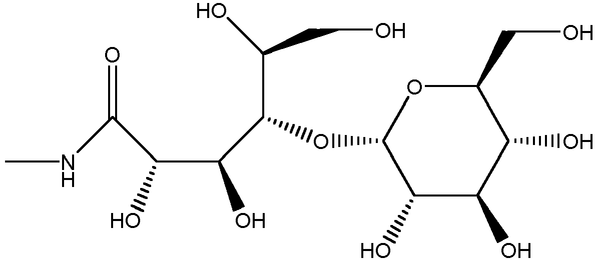

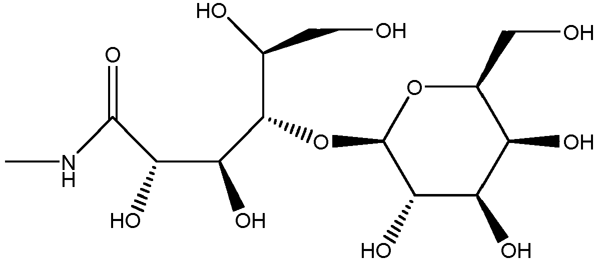

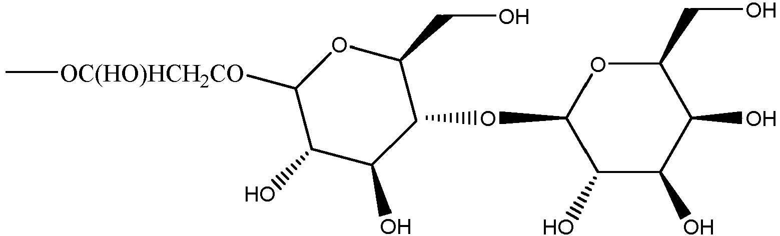

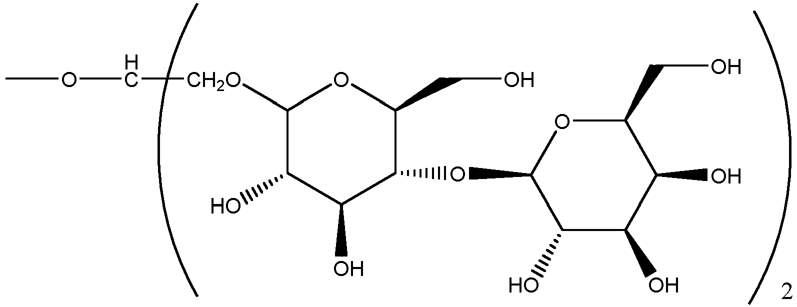

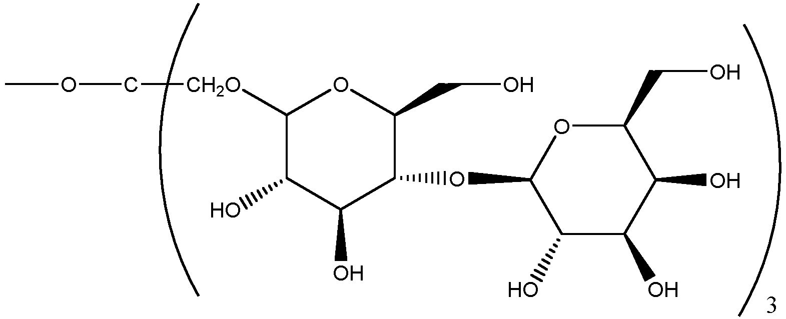

-O-CH{CH₂OCH(CH₂OH)₂}₂

-O-CH{CH₂OCH[CH₂OCH(CH₂OH)₂]₂}₂

wherein p is an integer selected from 2 to 20, or
B) silanes that result in a hydrophobic or a mixed hydrophollic/hydrophobic surface modification (B¹)*ₓ*(R⁵)*_{y}*(R⁶)*_{z}*Si-(CH₂)*ₙ*-1A

### Hydrophobic Surface

| **Option** | **B¹** | **R⁵** | **R⁶** | **x/y/z** | **n¹** |
|---|---|---|---|---|---|
| 1 | chloro, methoxy, or ethoxy | -- | -- | 3/0/0 | 1-18 |
| 2 | chloro, methoxy, or ethoxy | methyl, ethyl, n-propyl, i-propyl, or t-butyl | -- | 2/1/0 | 3-18 |
| 3 | chloro, methoxy, or ethoxy | methyl, ethyl, n-propyl, i-propyl, or t-butyl | -- | 1/2/0 | 1-3-18 |
| 4 | chloro, methoxy, or ethoxy | methyl, ethyl, n-propyl, i-propyl, or t-butyl | methyl, ethyl, n-propyl, i-propyl, or t-butyl | 1/1/1 | 3-18 |

where A is selected from the following; H, phenyl, NHC(O)NHR⁸, NHC(O)R⁸, OC(O)NHR⁸, OC(O)OR⁸, or triazole-R⁸, where R⁸ is octadecyl, dodecyl, decyl, octyl, hexyl, n-butyl, t-butyl, n-propyl, i-propyl, phenyl, benzyl, phenethyl, phenylethyl, phenylpropyl, diphenylethyl, biphenylyl.

In certain embodiments of the device of the invention, Z represents an attachment to a surface organofunctional hybrid group through a direct carbon-carbon bond formation or through a heteroatom, ester, ether, thioether, amine, amide, imide, urea, carbonate, carbamate, heterocycle, triazole, or urethane linkage.

In other embodiments, Z represents an adsorbed, surface group that is not covalently attached to the surface of the material. This surface group can be a cross-linked polymer, or other adsorbed surface group. Examples include, but are not limited to alcohols, amines, thiols, polyamines, dedrimers, or polymers.

### Housing, Detectors and Sample Injection Devices

In some embodiments, of the device of the invention, the housing is equipped with one or more frits to contain the stationary phase material.

In some embodiments, the housing is equipped with one or more fittings capable of placing the device in fluid communication with a sample injection device, a detector or both.

Examples of detectors used for size-exclusion chromatography are, without limitation, refractive index detectors, UV detectors, light-scattering detectors and mass spectrometers.

Examples of injection devices include, without being limited thereto, on-column injectors, PTV injectors, gas sampling valves, purge and trap systems, multi injectors, split injectors, splitless injectors, and split/splitless injectors.

### DEFINITIONS

As used above, the term "aliphatic group" includes organic compounds characterized by straight or branched chains, typically having between 1 and 22 carbon atoms.

Aliphatic groups include alkyl groups, alkenyl groups and alkynyl groups. In complex structures, the chains can be branched or cross-linked. Alkyl groups include saturated hydrocarbons having one or more carbon atoms, including straight-chain alkyl groups and branched-chain alkyl groups. Such hydrocarbon moieties may be substituted on one or more carbons with, for example, a halogen, a hydroxyl, a thiol, an amino, an alkoxy, an alkylcarboxy, an alkylthio, or a nitro group. Unless the number of carbons is otherwise specified, "lower aliphatic" as used herein means an aliphatic group, as defined above (e.g., lower alkyl, lower alkenyl, lower alkynyl), but having from one to six carbon atoms. Representative of such lower aliphatic groups, e.g., lower alkyl groups, are methyl, ethyl, n-propyl, isopropyl, 2-chloropropyl, n-butyl, sec-butyl, 2-aminobutyl, isobutyl, tert-butyl, 3-thiopentyl and the like. As used herein, the term "nitro" means -NO₂; the term "halogen" designates -F, -Cl, -Br or -I; the term "thiol" means SH; and the term "hydroxyl" means -OH. Thus, the term "alkylamino" as used herein means an alkyl group, as defined above, having an amino group attached thereto. Suitable alkylamino groups include groups having 1 to about 12 carbon atoms, or from 1 to about 6 carbon atoms. The term "alkylthio" refers to an alkyl group, as defined above, having a sulfhydryl group attached thereto. Suitable alkylthio groups include groups having 1 to about 12 carbon atoms, or from 1 to about 6 carbon atoms. The term "alkylcarboxyl" as used herein means an alkyl group, as defined above, having a carboxyl group attached thereto. The term "alkoxy" as used herein means an alkyl group, as defined above, having an oxygen atom attached thereto. Representative alkoxy groups include groups having 1 to about 12 carbon atoms, or 1 to about 6 carbon atoms, e.g., methoxy, ethoxy, propoxy, tert-butoxy and the like. The terms "alkenyl" and "alkynyl" refer to unsaturated aliphatic groups analogous to alkyls, but which contain at least one double or triple bond respectively. Suitable alkenyl and alkynyl groups include groups having 2 to about 12 carbon atoms, or from 1 to about 6 carbon atoms.

The term "alicyclic group" includes closed ring structures of three or more carbon atoms. Alicyclic groups include cycloparaffins or naphthenes which are saturated cyclic hydrocarbons, cycloolefins, which are unsaturated with two or more double bonds, and cycloacetylenes which have a triple bond. They do not include aromatic groups. Examples of cycloparaffins include cyclopropane, cyclohexane and cyclopentane. Examples of cycloolefins include cyclopentadiene and cyclooctatetraene. Alicyclic groups also include fused ring structures and substituted alicyclic groups such as alkyl substituted alicyclic groups. In the instance of the alicyclics such substituents can further comprise a lower alkyl, a lower alkenyl, a lower alkoxy, a lower alkylthio, a lower alkylamino, a lower alkylcarboxyl, a nitro, a hydroxyl, -CF₃, -CN, or the like.

The term "heterocyclic group" includes closed ring structures in which one or more of the atoms in the ring is an element other than carbon, for example, nitrogen, sulfur, or oxygen. Heterocyclic groups can be saturated or unsaturated and heterocyclic groups such as pyrrole and furan can have aromatic character. They include fused ring structures such as quinoline and isoquinoline. Other examples of heterocyclic groups include pyridine and purine. Heterocyclic groups can also be substituted at one or more constituent atoms with, for example, a halogen, a lower alkyl, a lower alkenyl, a lower alkoxy, a lower alkylthio, a lower alkylamino, a lower alkylcarboxyl, a nitro, a hydroxyl, -CF₃, -CN, or the like. Suitable heteroaromatic and heteroalicyclic groups generally will have 1 to 3 separate or fused rings with 3 to about 8 members per ring and one or more N, O or S atoms, e.g. coumarinyl, quinolinyl, pyridyl, pyrazinyl, pyrimidyl, furyl, pyrrolyl, thienyl, thiazolyl, oxazolyl, imidazolyl, indolyl, benzofuranyl, benzothiazolyl, tetrahydrofuranyl, tetrahydropyranyl, piperidinyl, morpholino and pyrrolidinyl.

The term "aromatic group" includes unsaturated cyclic hydrocarbons containing one or more rings. Aromatic groups include 5- and 6-membered single-ring groups which may include from zero to four heteroatoms, for example, benzene, pyrrole, furan, thiophene, imidazole, oxazole, thiazole, triazole, pyrazole, pyridine, pyrazine, pyridazine and pyrimidine and the like. The aromatic ring may be substituted at one or more ring positions with, for example, a halogen, a lower alkyl, a lower alkenyl, a lower alkoxy, a lower alkylthio, a lower alkylamino, a lower alkylcarboxyl, a nitro, a hydroxyl, -CF₃, -CN, or the like.

The term "alkyl" includes saturated aliphatic groups, including straight-chain alkyl groups, branched-chain alkyl groups, cycloalkyl (alicyclic) groups, alkyl substituted cycloalkyl groups and cycloalkyl substituted alkyl groups. In certain embodiments, a straight chain or branched chain alkyl has 30 or fewer carbon atoms in its backbone, e.g., C₁-C₃₀ for straight chain or C₃-C₃₀ for branched chain. In certain embodiments, a straight chain or branched chain alkyl has 20 or fewer carbon atoms in its backbone, e.g., C₁-C₂₀ for straight chain or C₃-C₂₀ for branched chain, and in some embodiments 18 or fewer. Likewise, particular cycloalkyls have from 4-10 carbon atoms in their ring structure and in some embodiments have 4-7 carbon atoms in the ring structure. The term "lower alkyl" refers to alkyl groups having from 1 to 6 carbons in the chain and to cycloalkyls having from 3 to 6 carbons in the ring structure.

Moreover, the term "alkyl" (including "lower alkyl") as used throughout the specification and claims includes both "unsubstituted alkyls" and "substituted alkyls", the latter of which refers to alkyl moieties having substituents replacing a hydrogen on one or more carbons of the hydrocarbon backbone. Such substituents can include, for example, halogen, hydroxyl, alkylcarbonyloxy, arylcarbonyloxy, alkoxycarbonyloxy, aryloxycarbonyloxy, carboxylate, alkylcarbonyl, alkoxycarbonyl, aminocarbonyl, alkylthiocarbonyl, alkoxyl, phosphate, phosphonato, phosphinato, cyano, amino (including alkyl amino, dialkylamino, arylamino, diarylamino and alkylarylamino), acylamino (including alkylcarbonylamino, arylcarbonylamino, carbamoyl and ureido), amidino, imino, sulfhydryl, alkylthio, arylthio, thiocarboxylate, sulfate, sulfonato, sulfamoyl, sulfonamido, nitro, trifluoromethyl, cyano, azido, heterocyclyl, aralkyl, or an aromatic or heteroaromatic moiety. It will be understood by those skilled in the art that the moieties substituted on the hydrocarbon chain can themselves be substituted, if appropriate. Cycloalkyls can be further substituted, e.g., with the substituents described above. An "aralkyl" moiety is an alkyl substituted with an aryl, e.g., having 1 to 3 separate or fused rings and from 6 to about 18 carbon ring atoms, e.g., phenylmethyl (benzyl).

The term "aryl" includes 5- and 6-membered single-ring aromatic groups that may include from zero to four heteroatoms, for example, unsubstituted or substituted benzene, pyrrole, furan, thiophene, imidazole, oxazole, thiazole, triazole, pyrazole, pyridine, pyrazine, pyridazine and pyrimidine and the like. Aryl groups also include polycyclic fused aromatic groups such as naphthyl, quinolyl, indolyl and the like. The aromatic ring can be substituted at one or more ring positions with such substituents, e.g., as described above for alkyl groups. Suitable aryl groups include unsubstituted and substituted phenyl groups. The term "aryloxy" as used herein means an aryl group, as defined above, having an oxygen atom attached thereto.

The term "aralkoxy" as used herein means an aralkyl group, as defined above, having an oxygen atom attached thereto. Suitable aralkoxy groups have 1 to 3 separate or fused rings and from 6 to about 18 carbon ring atoms, e.g., O-benzyl.

The term "amino," as used herein, refers to an unsubstituted or substituted moiety of the formula - NR^{a}R^{b}, in which R^{a} and R^{b} are each independently hydrogen, alkyl, aryl, or heterocyclyl, or R^{a} and R^{b}, taken together with the nitrogen atom to which they are attached, form a cyclic moiety having from 3 to 8 atoms in the ring. Thus, the term "amino" includes cyclic amino moieties such as piperidinyl or pyrrolidinyl groups, unless otherwise stated. An "amino-substituted amino group" refers to an amino group in which at least one of R^{a} and R^{b}, is further substituted with an amino group.

The term "protecting group," as used herein, refers to chemical modification of functional groups that are well known in the field of organic synthesis. Exemplary protecting groups can vary, and are generally described in Protective Groups in Organic Synthesis [T. W. Green and P. G. M. Wuts, John Wiley & Sons, Inc, 1999].

"Hybrid", including "organic-inorganic hybrid material," includes inorganic-based structures wherein an organic functionality is integral to both the internal or "skeletal" inorganic structure as well as the hybrid material surface. The inorganic portion of the hybrid material may be, e.g., e.g., alumina, silica, titanium, cerium, or zirconium or oxides thereof, or ceramic material. "Hybrid" includes inorganic-based structures wherein an organic functionality is integral to both the internal or "skeletal" inorganic structure as well as the hybrid material surface. As noted above, exemplary hybrid materials are shown in U.S. Pat. Nos. 4,017,528, 6,528,167, 6,686,035 and 7,175,913.

The term "BEH," as used herein, refers to an organic-inorganic hybrid material which is a ethylene bridged hybrid material.

The term "adsorbed group," as used herein, represents a monomer, oligimer ro polymer, crosslinked or non-crosslinked, that is non-covalently attached to the core material. In certain embodiments of the invention, wherein Z represents an adsorbed group, the group can be adsorbed onto the core material, X, the surface of the core material, X, or the surface of the stationary phase material. Examples include, but are not limited to alcohols, amines, thiols, polyamines, dedrimers, or polymers.

The term "functionalizing group" or "functionalizable group" includes organic functional groups which impart a certain chromatographic functionality to a stationary phase.

The term "terminal group," as used herein, represents a group which cannot undergo further reactions. In certain embodiments, a terminal group may be a hydrophilic terminal group. Hydrophilic terminal groups include, but are not limited to, protected or deprotected forms of an alcohol, diol, glycidyl ether, epoxy, triol, polyol, pentaerythritol, pentaerythritol ethoxylate, 1,3-dioxane-5,5-dimethanol, tris(hydroxymethyl)aminomethane, tris(hydroxymethyl)aminomethane polyglycol ether, ethylene glycol, propylene glycol, poly(ethylene glycol), poly(propylene glycol), a mono-valent, divalent, or polyvalent carbohydrate group, a multi-antennary carbohydrate, a dendrimer containing peripheral hydrophilic groups, a dendrigraph containing peripheral hydrophilic groups, or a zwitterion group.

The term "surface attachment group," as used herein, represents a group which may be reacted to covalently bond, non-covalently bond, adsorb, or otherwise attach to the core material, the surface of the core material, or the surface of the stationary phase material. In certain embodiments, the surface attachment group is attached to the surface of the core material by a siloxane bond.

These and other features and advantages of the present invention will be apparent to those skilled in the art upon viewing the drawing described below and reading the detailed description that follows.

### EXAMPLES

The present invention may be further illustrated by the following non-limiting examples describing the chromatographic devices and methods.

### Materials

All reagents were used as received unless otherwise noted. Those skilled in the art will recognize that equivalents of the following supplies and suppliers exist and, as such, the suppliers listed below are not to be construed as limiting.

### Characterization

Those skilled in the art will recognize that equivalents of the following instruments and suppliers exist and, as such, the instruments listed below are not to be construed as limiting.

### Example 1

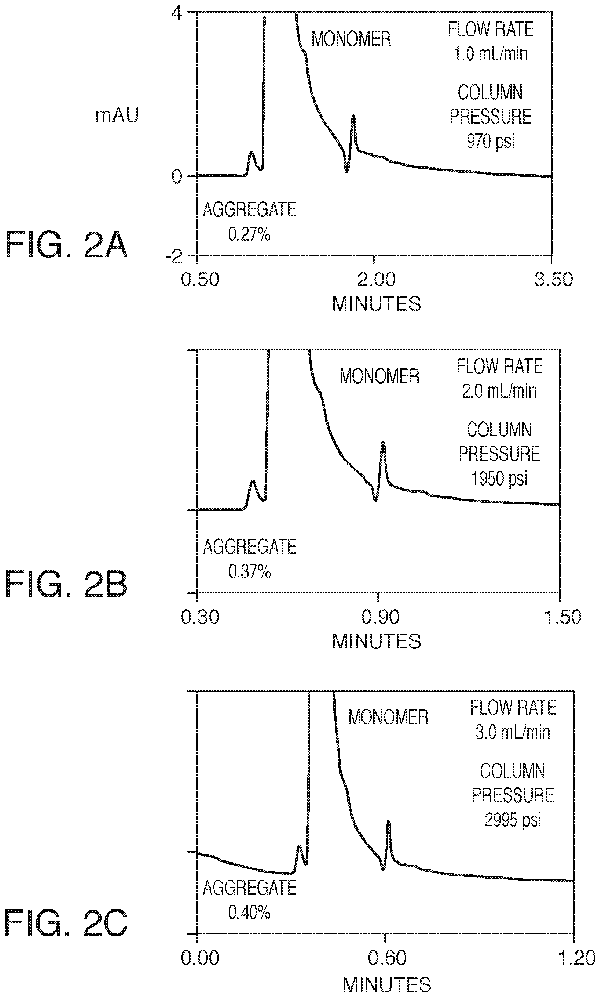

Formulated infliximab (Remicade, 10 mg/mL, Janssen) was diluted to 2 mg/mL and injected onto a 7.8 x 50 mm column packed with 1.7 µm 200Å diol bonded organosilica particles with a 5 µL injection volume. Separations were performed using a UHPLC chromatograph (ACQUITY^{®} Arc, Waters, Milford, MA), a temperature of 30°C, a range of flow rates from 1.0 to 3.0 mL/min, and a pH 6.8 mobile phase comprised of 100mM sodium phosphate and 200 mM sodium chloride. FIG. 2 presents chromatograms obtained using this prototype SEC apparatus. Details of the experimental parameters can be found below. See **FIGs. 2A-2C****.**

### LC Conditions

| | |
|---|---|
| Column: | 1.7 µm 200Å pore diameter diol-bonded organosilica (BEH SEC) packed in a 7.8 x 50 mm column dimension |
| System: | Waters ACQUITY^{®} Arc |
| Mobile Phase: | 100mM Sodium Phosphate dibasic pH6.8, 200mM NaCl |
| Flow Rates: | 1.0 ml/min, 2.0 ml/min, or 3.0 ml/min |
| Run Times: | 3.50 min, 1.50 min., 1.20 min. |
| Column Temp: | 30°C |
| UV Detection: | 280 nm, 40 Hz |
| Sample: | Diluted infliximab (2 mg/mL) |
| Injection Volume: | 5 µL |

## Claims

1. A method of performing size exclusion chromatography comprising the steps of
a) providing a housing (13) having at least one wall (17) defining a chamber (19) having an entrance (25) and an exit (27); and a stationary phase material comprising a core and surface composition held in said chamber (19); wherein said stationary phase material comprises particles having a mean size, i.e. diameter, of less than 2.0 micrometers and wherein the housing (13) comprises a wide bore column of a bore size of 7.8 mm inner diameter, i.d., or more;
b) loading a sample on said stationary phase material in said chamber (19) at a column inlet pressure of greater than 3 MPa (500 psi) and flowing the sample through said stationary phase material; and
c) separating the sample into one or more biomolecule analytes by size, wherein the flowing the sample through said stationary phase material is carried out at a flow rate of about 1mL/min or more

2. The method of claim 1, wherein the length of the chamber (19) is less than about 50 mm.

3. The method of claim 1, wherein the duration of the method is less than 60 minutes, 50 minutes, 40 minutes, 30 minutes, 20 minutes, 10 minutes, 5 minutes, 4 minutes, 3 minutes, 2 minutes, or 1 minute.

4. The method of claim 1, wherein the flowing the sample over the stationary phase is carried out at an inlet pressure greater than 7 MPa (1,000 psi).

5. The method of claim 1, wherein the flowing the sample over the stationary phase is carried out at a flow rate of about 1mL/min to about 3 mL/min.

6. The method of claim 1, wherein the flowing the sample over the stationary phase is carried out at a flow rate of greater than 3 mL/min.

7. The method of claim 1, wherein the stationary phase material comprises particles having a mean size, i.e. diameter, of about 1.7 micrometers.

8. The method of claim 1, wherein the sample comprises one or more biomolecule analytes, wherein the biomolecule analyte is a nucleic acid (e.g., RNA, DNA, oligonucleotide), protein (e.g., fusion protein), peptide, antibody (e.g., monoclonal antibody (mAb)), antibody-drug conjugate (ADC), polysaccharides, virus, virus-like particle, viral vector (e.g., gene therapy viral vector, adeno associated viral vector), biosimilar, or any combination thereof.

9. The method of claim 1, wherein the length of the chamber (19) is about 50 mm, about 30 mm, about 20 mm, about 10 mm, less than about 30 mm, 20 mm, or 10 mm.

10. The method of claim 1, wherein the method further comprises an additional separation or resolution step.

11. The method of claim 1, wherein the method further comprises a reverse phase chromatography, affinity chromatography, or ion exchange chromatography step.

12. The method of claim 10 or 11, wherein the additional separation step comprises use of an immobilized enzyme column.

## Patentansprüche

1. Verfahren zum Durchführen einer Größenausschlusschromatographie, umfassend die Schritte
a) Bereitstellen eines Gehäuses (13), das mindestens eine Wand (17) aufweist, die eine Kammer (19) definiert, die einen Eingang (25) und einen Ausgang (27) aufweist; und ein Material einer stationären Phase, umfassend eine Kern- und Oberflächenzusammensetzung, die in der Kammer (19) gehalten wird; wobei das Material der stationären Phase Partikel umfasst, die eine mittlere Größe, d. h. einen Durchmesser, von weniger als 2,0 Mikrometer aufweisen, und wobei das Gehäuse (13) eine Wide-Bore-Säule und eine Bore-Größe von 7,8 mm Innendurchmesser oder mehr umfasst;
b) Laden einer Probe auf das Material einer stationären Phase in der Kammer (19) bei einem Säuleneneinlassdruck von mehr als 3 MPa (500 psi) und Strömen der Probe durch das Material einer stationären Phase; und
c) Trennen der Probe in einen oder mehrere Biomolekülanalyten nach Größe, wobei das Strömen der Probe durch das Material einer stationären Phase mit einer Strömungsrate von etwa 1 ml/min oder mehr vorgenommen wird

2. Verfahren nach Anspruch 1, wobei die Länge der Kammer (19) weniger als etwa 50 mm beträgt.

3. Verfahren nach Anspruch 1, wobei die Dauer des Verfahrens weniger als 60 Minuten, 50 Minuten, 40 Minuten, 30 Minuten, 20 Minuten, 10 Minuten, 5 Minuten, 4 Minuten, 3 Minuten, 2 Minuten oder 1 Minute beträgt.

4. Verfahren nach Anspruch 1, wobei das Strömen der Probe über die stationäre Phase bei einem Eingangsdruck von mehr als 7 MPa (1.000 psi) vorgenommen wird.

5. Verfahren nach Anspruch 1, wobei das Strömen der Probe über die stationäre Phase mit einer Strömungsrate von etwa 1 ml/min bis etwa 3 ml/min vorgenommen wird.

6. Verfahren nach Anspruch 1, wobei das Strömen der Probe über die stationäre Phase mit einer Strömungsrate von mehr als 3 ml/min vorgenommen wird.

7. Verfahren nach Anspruch 1, wobei das Material der stationären Phase Partikel umfasst, die eine mittlere Größe, d. h. Durchmesser, von etwa 1,7 Mikrometern aufweisen.

8. Verfahren nach Anspruch 1, wobei die Probe einen oder mehrere Biomolekülanalyten umfasst, wobei der Biomolekülanalyt eine Nukleinsäure (z. B. RNA, DNA, Oligonukleotid), ein Protein (z. B. Fusionsprotein), ein Peptid, ein Antikörper (z. B. monoklonaler Antikörper (mAb)), ein Antikörper-Arzneimittel-Konjugat (ADC), Polysaccharide, ein Virus, ein virusähnliches Partikel, ein viraler Vektor (z. B. viraler Vektor für die Gentherapie, adeno-assoziierter viraler Vektor), ein Biosimilar oder eine beliebige Kombination davon ist.

9. Verfahren nach Anspruch 1, wobei die Länge der Kammer (19) etwa 50 mm, etwa 30 mm, etwa 20 mm, etwa 10 mm, weniger als etwa 30 mm, 20 mm oder 10 mm beträgt.

10. Verfahren nach Anspruch 1, wobei das Verfahren ferner einen zusätzlichen Trenn- oder Auflösungsschritt umfasst.

11. Verfahren nach Anspruch 1, wobei das Verfahren ferner einen Schritt einer Umkehrphasenchromatographie, Affinitätschromatographie oder Ionenaustauschchromatographie umfasst.

12. Verfahren nach Anspruch 10 oder 11, wobei der zusätzliche Trennschritt eine Verwendung einer immobilisierten Enzymsäule umfasst.

## Revendications

1. Procédé de mise en œuvre d'une chromatographie d'exclusion stérique comprenant les étapes consistant à
a) fournir un logement (13) ayant au moins une paroi (17) définissant une chambre (19) ayant une entrée (25) et une sortie (27) ; et un matériau de phase stationnaire comprenant une composition de noyau et de surface maintenue dans ladite chambre (19) ; dans lequel ledit matériau de phase stationnaire comprend des particules ayant une taille moyenne, c'est-à-dire un diamètre, inférieur à 2,0 micromètres et dans lequel le logement (13) comprend une colonne à large alésage d'une taille d'alésage de 7,8 mm de diamètre interne, d.i., ou plus ;
b) charger un échantillon sur ledit matériau de phase stationnaire dans ladite chambre (19) à une pression d'entrée de colonne supérieure à 3 MPa (500 psi) et faire s'écouler l'échantillon à travers ledit matériau de phase stationnaire ; et
c) séparer l'échantillon en un ou plusieurs analytes biomoléculaires par taille, dans lequel l'écoulement de l'échantillon à travers ledit matériau de phase stationnaire est effectué à un débit d'environ 1 mL/min ou plus

2. Procédé selon la revendication 1, dans lequel la longueur de la chambre (19) est inférieure à environ 50 mm.

3. Procédé selon la revendication 1, dans lequel la durée du procédé est inférieure à 60 minutes, 50 minutes, 40 minutes, 30 minutes, 20 minutes, 10 minutes, 5 minutes, 4 minutes, 3 minutes, 2 minutes ou 1 minute.

4. Procédé selon la revendication 1, dans lequel l'écoulement de l'échantillon par-dessus la phase stationnaire est effectué à une pression d'entrée supérieure à 7 MPa (1000 psi).

5. Procédé selon la revendication 1, dans lequel l'écoulement de l'échantillon par-dessus la phase stationnaire est effectué à un débit d'environ 1 mL/min à environ 3 mL/min.

6. Procédé selon la revendication 1, dans lequel l'écoulement de l'échantillon par-dessus la phase stationnaire est effectué à un débit supérieur à 3 mL/min.

7. Procédé selon la revendication 1, dans lequel le matériau de phase stationnaire comprend des particules ayant une taille moyenne, c'est-à-dire un diamètre, d'environ 1,7 micromètre.

8. Procédé selon la revendication 1, dans lequel l'échantillon comprend un ou plusieurs analytes biomoléculaires, dans lequel l'analyte biomoléculaire est un acide nucléique (par exemple, ARN, ADN, oligonucléotide), une protéine (par exemple, une protéine de fusion), un peptide, un anticorps (par exemple, un anticorps monoclonal (mAb)), un conjugué anticorps-médicament (ADC), des polysaccharides, un virus, une particule de type virus, un vecteur viral (par exemple, un vecteur viral de thérapie génique, un vecteur viral adéno-associé), un biosimilaire, ou n'importe quelle combinaison de ceux-ci.

9. Procédé selon la revendication 1, dans lequel la longueur de la chambre (19) est d'environ 50 mm, environ 30 mm, environ 20 mm, environ 10 mm, moins d'environ 30 mm, 20 mm ou 10 mm.

10. Procédé selon la revendication 1, dans lequel le procédé comprend en outre une étape supplémentaire de séparation ou de résolution.

11. Procédé selon la revendication 1, dans lequel le procédé comprend en outre une étape de chromatographie à inversion de phase, de chromatographie d'affinité ou de chromatographie d'échange d'ions.

12. Procédé selon la revendication 10 ou 11, dans lequel l'étape supplémentaire de séparation comprend l'utilisation d'une colonne à enzyme immobilisée.
